(19) **Europäisches Patentamt European Patent Office Office européen des brevets**

(11) **EP 3 924 400 B1**

(12) **FASCICULE DE BREVET EUROPEEN**

(45) Date de publication et mention de la délivrance du brevet:
**10.04.2024 Bulletin 2024/15**

(21) Numéro de dépôt: **20701226.1**

(22) Date de dépôt: **27.01.2020**

(51) Classification Internationale des Brevets (IPC):
**C08G 59/00** *(2006.01)* **C08G 65/00** *(2006.01)*
**C08G 65/40** *(2006.01)* **C08L 63/00** *(2006.01)*
**C08L 71/00** *(2006.01)*

(52) Classification Coopérative des Brevets (CPC):
**C08L 71/00; C08G 59/00; C08G 65/00; C08G 65/40; C08L 63/00**

(86) Numéro de dépôt international:
**PCT/EP2020/051941**

(87) Numéro de publication internationale:
**WO 2020/164896 (20.08.2020 Gazette 2020/34)**

(54) **KIT POUR REVÊTEMENT DE SOL OU POUR REVÊTEMENT MURAL**

KIT FÜR BODEN- ODER WANDBESCHICHTUNG

KIT FOR FLOOR OR WALL COATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2019 FR 1901556**

(43) Date de publication de la demande:
**22.12.2021 Bulletin 2021/51**

(73) Titulaire: **Saint-Gobain Weber**
**94370 Sucy-en-Brie (FR)**

(72) Inventeurs:
• **LACOMBE, Jérémie**
**93400 SAINT-OUEN (FR)**
• **SAVONNET, Marie**
**75018 PARIS (FR)**

(74) Mandataire: **Saint-Gobain Recherche**
**B.P. 135**
**39, quai Lucien Lefranc**
**93303 Aubervilliers Cedex (FR)**

(56) Documents cités:
**EP-A1- 1 921 100      WO-A1-85/01951**
**FR-A1- 2 931 832      GB-A- 883 521**
**KR-B1- 101 755 432    US-A1- 2013 005 853**

**Description**

L'invention se rapporte au domaine des revêtements de sol ou des revêtements muraux, notamment intérieurs, notamment pour des sols ou murs de bâtiments à usage résidentiel, commercial, industriel ou tertiaire.

On entend par revêtement de sol de bâtiment dans le présent texte un revêtement faisant partie d'un sol d'un bâtiment. Il s'agit le plus souvent de sols intérieurs (situés à l'intérieur du bâtiment), mais il peut aussi s'agir de sols extérieurs (faisant partie du bâtiment mais situés à l'extérieur de celui-ci, comme les sols de balcons ou de terrasses). Les revêtements de sols, en particulier intérieurs, sont des couches déposées au-dessus de chapes, comme des couches d'adhérence (aussi appelés primaires d'adhérence), des couches de masse et des couches de finition. La plupart du temps visibles des occupants du logement, les revêtements de sol doivent ainsi présenter une esthétique adaptée, une bonne résistance à l'usure et aux taches, ainsi qu'aux solvants, et une facilité de nettoyage. Les revêtements de sol doivent répondre à des exigences fortes en termes de résistance mécanique (notamment en termes de résistance à la compression, à la flexion, à l'usure ou à l'impact), de manière à résister aux contraintes exercées par les personnes, les meubles etc...

On entend par revêtement mural un revêtement faisant partie du mur d'un bâtiment. Il peut en particulier s'agir de peintures, lesquelles doivent présenter, outre une esthétique adaptée, une bonne durabilité (notamment aux rayures et à l'abrasion). D'autres propriétés désirables sont des propriétés d'imperméabilisation, de facilité de nettoyage, de résistance chimique (notamment aux agents de nettoyage et solvants).

On connaît des revêtements à base de mortier de ciment, obtenus en gâchant un mortier pulvérulent sec de manière à obtenir une pâte, puis en déversant ladite pâte sur le support à revêtir. Les propriétés des mortiers étant très dépendantes de la quantité d'eau de gâchage ajoutée, la mise en oeuvre de ces revêtements est délicate si bien qu'elle doit être réalisée par des professionnels spécialisés. Il existe donc un besoin de disposer de solutions prêtes à l'emploi, ne nécessitant pas d'ajout d'eau de gâchage.

Un but de l'invention est de proposer une telle solution prête à l'emploi, facilement applicable, capable de produire un durcissement rapide à température ambiante, et qui permette d'obtenir des revêtements qui présentent une excellente résistance tant du point de vue mécanique que chimique.

Ces buts sont atteints par la présente invention, laquelle a pour objet un kit pour revêtement de sol ou pour revêtement mural comprenant :

- un composant A comprenant une résine époxyde,
- un composant B comprenant un durcisseur, qui est un composé comprenant au moins une fonction N-H ou S-H ou un mélange de plusieurs de ces composés, et un catalyseur, qui un composé comprenant au moins un groupe amine tertiaire ou un mélange de plusieurs de ces composés,

dans lequel le rapport molaire R entre le nombre total de groupes époxydes dans le composant A et le nombre total de fonctions N-H et/ou S-H dans le composant B est d'au moins 1,2 et le rapport T entre la teneur pondérale totale en catalyseur dans le kit et la teneur pondérale totale en résine époxyde dans le kit est compris entre 0,02 et 0,3.

Différentes compositions à base de résine époxyde et de durcisseurs azotés, telles que des polyamines, ont été décrites dans l'art antérieur (FR2931832, WO85/01951, US2013/005853, KR1071755432, EP1921100, GB883521). Aucune de ces compositions n'est sous la forme d'un kit pour revêtement de sol ou mural, dans lequel le rapport R est d'au moins 1,2 et le rapport T est compris entre 0,02 et 0,3.

Les inventeurs ont pu mettre en évidence que l'utilisation d'un catalyseur tel que décrit précédemment, en combinaison avec un excès de groupes époxydes permettait aisément, notamment grâce à un durcissement à température ambiante, d'obtenir un revêtement possédant d'excellentes propriétés mécaniques, en particulier en termes de résistance à la compression, et une excellente résistance chimique (en particulier au taches), se traduisant notamment par une facilité de nettoyage.

Par durcisseur on entend un composé, appelé composé durcisseur, comprenant au moins une fonction N-H ou S-H ou le cas échéant un mélange de plusieurs de ces composés. Dans ce dernier cas, le terme « durcisseur » englobe l'ensemble de ces composés.

Par catalyseur on entend un composé, appelé composé catalyseur, comprenant au moins un groupe amine tertiaire, ou le cas échéant un mélange de plusieurs de ces composés. Dans ce dernier cas, le terme « catalyseur » englobe l'ensemble de ces composés. Le rapport T prend en compte l'ensemble des composés catalyseurs au sens de l'invention, donc l'ensemble des composés comprenant au moins un groupe amine tertiaire présents dans le kit. Le rapport T prend également en compte, lorsque le kit comprend plusieurs résines époxydes différentes, l'ensemble des résines époxydes contenus dans le kit. Les teneurs utilisées dans le calcul du rapport T sont rapportées au kit dans son ensemble.

Un composé portant à la fois au moins un groupe amine tertiaire et au moins une fonction N-H ou S-H est donc à la fois un composé catalyseur et un composé durcisseur, ou fait partie à la fois du catalyseur et du durcisseur lorsque ces derniers sont des mélanges de composés différents.

On entend par « résine époxyde » un monomère ou pré-polymère comprenant au moins deux groupes époxydes ou un mélange de tels monomères ou pré-polymères. Elle peut comprendre typiquement deux ou trois groupes époxydes. La résine époxyde est de préférence susceptible d'être issue de la réaction entre de l'épichlorhydrine et au moins un polyol. Le au moins un polyol est de préférence choisi parmi les polyols saturés, non saturés, branchés, linéaires ou cycliques, notamment le bisphénol A, le bisphénol F, les résines novolaques, l'éthylène glycol, le propylène glycol, le butylène glycol, l'hexanediol, les polypropylènes glycols, les polyéthylène glycols, le diméthylolcyclohexane et l'huile de ricin.

Dans le calcul du rapport R, le nombre total (en moles) de groupes époxydes dans le composant A est pris en compte. Il s'agit donc des groupes époxydes des résines époxydes, mais aussi, le cas échéant, d'éventuels groupes époxydes contenus dans d'autres constituants du composant A, par exemple dans des diluants réactifs, décrits plus en détail dans la suite du texte.

Le ou chaque composé durcisseur, qui comprend au moins une fonction N-H (fonctions amines primaires ou secondaires) ou S-H (fonctions thiols), est apte à réagir avec les groupes époxydes de la résine époxyde en formant des liaisons covalentes, et à l'issue de la réaction, un polymère thermodurcissable sous la forme d'un réseau tridimensionnel.

De préférence, le durcisseur comprend (ou consiste en) un composé comprenant au moins une fonction N-H. Le durcisseur peut aussi consister en un mélange de composés comprenant au moins une fonction N-H. Les amines sont en effet préférées aux thiols car ces derniers possèdent généralement une odeur forte et désagréable.

Le ou chaque composé durcisseur comprend de préférence au moins deux, voire quatre ou encore six fonctions N-H. Un groupe amine primaire ($NH_2$) compte dans le calcul du rapport R pour deux fonctions N-H. Une diamine comprenant deux groupes amine primaire compte par conséquent pour quatre fonctions N-H.

De préférence, le durcisseur comprend une polyamine, c'est-à-dire un composé chimique comprenant au moins deux groupes amines. Il peut par exemple s'agir d'une diamine ou d'une triamine. Les groupes amines sont des amines primaires (comptant pour deux fonctions N-H) ou secondaires (possédant une seule fonction N-H). Il s'agit avantageusement de groupes amines primaires. Les amines primaires peuvent en effet réagir avec deux groupes époxydes, tandis que les amines secondaires ne peuvent réagir qu'avec un seul groupe époxyde.

Le durcisseur est avantageusement choisi dans le groupe formé par les polyamines aliphatiques, les polyamines cycloaliphatiques, les polyamines arylaliphatiques, les polyamines aromatiques, les polyamines contenant au moins un groupe éther, les polyamidoamines, les phénalkamines ou bases de Mannich, les amines grasses, les adduits de ces polyamines avec des résines époxydes, et les mélanges de deux ou plus de ces polyamines.

Les polyamines aliphatiques sont notamment choisies parmi la 2,2-dimethyl-1,3-propanediamine, la 1,3-pentanediamine, la 1,5-pentanediamine, le 1,5-diamino-2-méthylpentane, la 2-butyl-2-ethyl-1,5-pentanediamine, la 1,6-hexanediamine, la 2,5-dimethyl-1,6-hexanediamine, la 2,2,4- et 2,4,4-trimethylhexamethylenediamine, la 1,7-heptanediamine, la 1,8-octanediamine, la 1,9-nonanediamine, la 1,10-decanediamine, la 1,11-undecanediamine, la 1,12-dodecanediamine, la 3-(2-aminoethyl)-aminopropylamine, la bis-(hexamethylène)-triamine, la diéthylènetriamine, la triéthylènetetramine, la tétraéthylène pentamine, la pentaéthylènehexamine et d'autres homologues de polyéthylène amines linéaires ayant 5 ou plus unités éthylène amine.

Les polyamines cycloaliphatiques sont notamment choisies parmi le 1,2-, 1,3- et 1,4-diaminocyclohexane, le bis-(4-aminocyclohexyl)-méthane, le bis-(4-amino-3-méthylcyclohexyl)-méthane, le bis-(4-amino-3-éthylcyclohexyl)-méthane, le bis-(4-amino-3,5-diméthylcyclohexyl)-méthane, le bis-(4-amino-3-éthyl-5-méthylcyclohexyl)-méthane, le 1-amino-3-aminométhyl-3,5,5-trimethylcyclohexane(isophoronediamine), le 2- et 4-méthyl-1,3-diaminocyclohexane, le 1,3- et 1,4-bis-(aminométhyl)-cyclohexane, le 1,4-diamino-2,2,6-trimethylcyclohexane.

Les polyamines arylaliphatiques sont notamment le 1,3-et 1,4- bis-(aminométhyl)-benzène.

Les polyamines contenant au moins un groupe éther sont connues en particulier sous le nom commercial de Jeffamine® (Huntsman) ou de Polyetheramine (BASF) ou PC Amine® (Nitroil). On peut citer en particulier les polyalkylène diamines comme la Jeffamine D-230®, la Jeffamine® D-400, la Jeffamine® D-2000, la Jeffamine® EDR-104, la Jeffamine® EDR-148 et la Jeffamine® EDR-176 et les polyamines correspondantes de BASF et Nitroil, ainsi que les polyalkylène triamines comme notamment la Jeffamine® T403, la Jeffamine® T-3000, la Jeffamine® T-5000 et les polyamines correspondantes de BASF et Nitroil.

Les polyamines aromatiques sont notamment choisies parmi la m- and p-phénylènediamine, le 4,4', 2,4' et 2,2'-diaminodiphénylméthane, le 3,3'-dichloro-4,4'-diaminodiphénylméthane, la 2,4- et 2,6-toluènediamine, les mélanges de 3,5-diméthylthio-2,4- et 2,6-toluylènediamine (commercialisé sous la référence Ethacure® 300 par la société Albemarle), les mélanges de 3,5-diéthyl-2,4- et -2,6-toluylènediamine, le 3,3',5,5'-tétraéthyl-4,4'-diaminodiphénylmethane, le 3,3',5,5'-tétraéthyl-2,2'-dichloro-4,4'-diaminodiphénylmethane, le 3,3'-diisopropyl 5,5'-diméthyl-4,4'-diaminodiphénylméthane, le 3,3',5,5'-tétraisopropyl-4,4'-diaminodiphénylméthane, la 4,4'-diaminodiphénylsulfone, la 4-amino-N-(4-aminophényl)-benzènesulfonamide, l'acide 5,5'-méthylènedianthranilique, la diméthyl-(5,5'-méthylènedianthranilate), le 1,3-propylène-bis-(4-aminobenzoate), le 1,4-butylène-bis-(4-aminobenzoate), le polytétraméthylèneoxide-bis-(4-aminobenzoate) (commercialisé sous la référence Versalink® par la société Evonik), le 1,2-bis (2-aminophénylthio)-éthane, le 2-méthylpropyl-(4-chloro-3,5-diaminobenzoate) et le tert-butyl-(4-chloro-3,5-diaminobenzoate).

Les polyamidoamines sont de préférence des produits de réaction d'un acide carboxylique monofonctionnel ou polyfonctionnel ou de leurs esters ou anhydrides, en particulier des acides gras, avec une polyamine aliphatique, cycloaliphatique, arylaliphatique ou aromatique (en particulier une polyalkylèneamine comme la diéthylènetriamine ou la triéthylènetétramine) utilisée en excès stoichiométrique. Ces produits sont en particulier, disponible commercialement sous le nom polyamidoamines Versamid® 100, 125, 140 et 150 (Cognis), Aradur R 223, 250 and 848(Huntsman), Euretek® 3607 et 530 (de Huntsman) et Beckopox®, EH 651, EH 654, EH 655,EH 661 et EH 663 (Cytec).

Les phénalkamines, aussi connues sous le nom de bases de Mannich, sont les produits de la réaction de dérivés de phénol avec des aldéhydes, en particulier le formaldéhyde, et des polyamines. On citera en particulier les bases de Mannich commercialement disponibles sous le nom de Cardolite® NC-541, NC-557, NC-558, NC-566, Lite 2001 et Lite 2002(Cardolite), Aradur R. 3440, 3441, 3442 et 3460(Huntsman) et Beckopox ®, EH 614, EH 621, EH 624, EH 628 and EH 629 (Cytec).

Les amines grasses sont de préférence la N-cocoalkyl-1,3-propanediamine et les produits d'une réaction de type Michael d'amines primaires avec l'acrylonitrile, des diesters maléiques, fumariques, citraconiques, esters acryliques et méthacryliques, amides acryliques et méthacryliques et diesters itaconiques, réagis avec un ratio molaire de 1:1.

Les adduits des polyamines mentionnés ci-dessus avec des résines époxydes sont en particulier les adduits avec les diépoxydes dans un ratio molaire d'environ 2/1, les adduits avec des monoépoxydes avec un ratio molaire d'au moins 1/1 et les produits de réaction des polyamines avec l'épichlorhydrine connu par exemple sous le nom Gaskamine® 328 (MGC).

Dans le calcul du rapport R, le nombre total (en moles) de fonctions N-H (et/ou S-H) dans le composant B est pris en compte.

Le rapport R rend compte du rapport entre le nombre de fonctions époxyde et le nombre de fonctions N-H (et/ou S-H), susceptibles de réagir avec ces fonctions époxydes. Un rapport de 1 (stœchiométrique) ou très légèrement supérieur à 1 est traditionnellement choisi de manière à permettre une réaction complète, tout en limitant, dans le polymère final, la présence d'amines n'ayant pas réagi (lesquelles peuvent impacter négativement certaines propriétés telles que la résistance aux solvants ou aux taches). Selon l'invention, ce rapport est donc inhabituellement élevé.

Le rapport R est de préférence d'au plus 8,0, notamment compris entre 1,3 et 8,0, ou entre 1,4 et 6,0, notamment entre 1,5 et 4,0 ou entre 1,6 et 3,5, voire entre 1,7 et 3,0 ou entre 1,8 et 2,5. Malgré ces rapports élevés, le taux de groupes époxydes n'ayant pas réagi à l'issue de la réaction est très faible, comme démontré ci-après.

Le rapport R peut notamment être calculé à partir des poids équivalents d'époxydes et des poids équivalents en hydrogène actif des composés utilisés.

Le poids équivalent d'époxydes d'un composé i comprenant au moins une fonction époxyde, noté EEW$_i$ (pour *Epoxy Equivalent Weigth*) correspond à la masse de composé i apportant une mole de fonctions époxyes.

On définit alors le poids équivalent d'époxydes du composant A (EEW) par la formule suivante :

[Math 1]

$$EEW = \frac{100}{\sum_i \frac{wt_i}{EEW_i}}$$

wt$_i$ étant le pourcentage massique du composé i dans le composant A.

Le poids équivalent en hydrogène actif d'un composé j, noté AHEW$_j$ (pour *Amine Hydrogen Equivalent Weight*) correspond à la masse de composé j apportant une mole d'hydrogène actif.

On définit alors le poids équivalent en hydrogène actif du composant B (AHEW) par la formule suivante :

[Math 2]

$$AHEW = \frac{100}{\sum_j \frac{wt_j}{AHEW_j}}$$

wt$_j$ étant le pourcentage massique du composé j dans le composant B.

Le rapport R peut alors être calculé à l'aide de la formule suivante :

[Math 3]

$$R = \frac{m_A}{m_B} \cdot \frac{AHEW}{EEW}$$

$m_A$ et $m_B$ étant respectivement la masse du composant A et la masse du composant B dans le kit.

Sans vouloir être lié par une quelconque théorie scientifique, il semblerait que la présence de catalyseur en concentration élevée, en combinaison avec un rapport R élevé, favorise des réactions d'homopolymérisation des résines époxydes entre elles, permettant d'obtenir même après durcissement à température ambiante un polymère ayant à la fois une excellente résistance mécanique, en particulier en compression, et une excellente résistance chimique, en particulier aux taches.

Comme évoqué précédemment, le catalyseur, ou un moins un composé catalyseur, peut dans certains cas contenir lui-même des fonctions N-H ou S-H, auquel cas le catalyseur (ou composé catalyseur) est également un durcisseur (ou composé durcisseur), ces fonctions étant prises en compte dans le calcul du rapport R.

Le catalyseur est de préférence choisi dans le groupe formé par les amines tertiaires ne contenant pas de fonction N-H (en particulier les phénols contenant au moins un groupe amine tertiaire et les dérivés d'imidazoles ne contenant pas de fonction N-H), les amines et polyamines contenant au moins un groupe amine tertiaire et au moins une fonction N-H, et les mélanges de deux ou plus de ces composés.

Les amines tertiaires ne possédant pas de fonction N-H sont de préférence choisies parmi le 1,4-diazabicyclo[2.2.2]octane, la benzyldiméthylamine, la triéthanolamine, la triéthylamine, la diméthylaminopropylamine, la pyridine, le 1,8-diaza-bicyclo[5.4.0]undec-7-ène, la méthylbenzyldiméthylamine, les phénols contenant un ou des groupes amines tertiaires , notamment le 2-(diméthylaminométhyl)-phénol (connu sous le nom DMP-10) ou le 2,4,6-tris-(diméthylaminométhyl)-phénol (DMP-30 ou Ancamine® K54 chez Evonik), et les dérivés d'imidazoles ne contenant pas de fonction N-H, notamment la N-méthylimidazole, la N-butylimidazole, la N-vinylimidazole ou encore la 1,2-dimethylimidazole.

Les amines ou polyamines contenant au moins un groupe amine tertiaire sont de préférence choisis parmi la N,N'-bis-(aminopropyl)-pipérazine, la N,N-bis-(3-aminopropyl)-méthylamine, la N,N-bis-(3-aminopropyl)-éthylamine, la N,N-bis-(3-aminopropyl)-propylamine, la N.N-bis-(3-aminopropyl)-cyclohexylamine, la N,N-bis-(3-aminopropyl)-2-éthylhexylamine ou encore la N,N-bis-(3-aminopropyl)-dodecylamine (disponible sous le nom de Triameen® Y12D chez Akzo Nobel), les imidazoles comme la benzimidazole, la 2-ethyl-4-methyl imidazole, ou encore les guanidines comme en particulier la 1,1,3,3-tetramethylguanidine ou la cyanoguanidine (dicyandiamide).

Le rapport T est de préférence compris entre 0,03 et 0,25, notamment entre 0,04 et 0,20, voire entre 0,05 et 0,15. Une teneur trop faible va limiter les réactions de polymérisation mentionnées plus haut et donc être néfaste quant aux propriétés mécaniques du revêtement. Une teneur trop élevée va réduire le temps de gel, et donc conduire à des durées de vie en pot trop faibles pour permettre une application aisée du revêtement. Pour calculer la teneur totale en catalyseur, il faut prendre en compte l'ensemble des composés comprenant au moins un groupe amine tertiaire.

Selon un mode de réalisation préféré, au moins un parmi ledit composant A et ledit composant B comprend au moins une charge minérale.

Les charges minérales permettent de diminuer le coût de la formulation et éventuellement d'améliorer certaines propriétés, comme la résistance à l'abrasion.

De préférence, le composant A comprend au moins une charge minérale. Dans ce cas, le composant B peut ne pas comprendre de charge minérale, ou peut comprendre une charge minérale, identique à ou différente de celle du composant A. Selon un deuxième mode de réalisation, le composant B comprend au moins une charge minérale. Dans ce cas, le composant A peut ne pas comprendre de charge minérale, mais de manière préférée comprend une charge minérale, identique à ou différente de celle du composant B. L'important est que le revêtement, après mélange des deux composants, comprenne au moins une charge minérale.

De préférence, seul le composant A comprend au moins une charge minérale.

Avantageusement, au moins une charge minérale est choisie parmi le carbonate de calcium, le sable, la silice, le quartz, le talc, le kaolin, le sulfate de baryum, les oxydes d'aluminium, les poudres métalliques et le verre expansé (par exemple du Poraver®).

Alternativement, le kit selon l'invention peut ne pas comprendre de charges minérales. C'est en particulier le cas pour des revêtements utilisés comme couches d'adhérence (ou primaire d'adhérence), donc non visibles par les occupants du logement.

Le composant A et/ou le composant B peut comprendre au moins un pigment minéral, par exemple du dioxyde de titane ou des oxydes de fer, ou organique. Les sables colorés peuvent toutefois avantageusement se substituer aux pigments. Les pigments permettent d'adapter l'aspect esthétique du revêtement, en particulier la coloration et l'opacité.

Le composant A et/ou le composant B peut également comprendre au moins un additif, notamment choisi parmi les accélérateurs, les diluants, réactifs (par exemple des composés ayant un seul groupe époxyde) ou non-réactifs (par exemple des solvants), les agents démoussants, les agents de rhéologie (notamment des agents épaississants ou thixotropiques), les agents de coalescence, les agents dispersants, les agents nivelants, les agents de mouillage, les promoteurs d'adhésion, les agents stabilisants vis-à-vis de l'oxydation, de la chaleur ou du rayonnement UV, les retardateurs de flamme (notamment des dérivés halogénés ou phosphorés).

Les accélérateurs permettent d'accélérer la réaction entre les résines époxydes et les durcisseurs. Les accélérateurs ne sont toutefois pas nécessaires car le catalyseur joue aussi ce rôle. Lorsqu'il est présent, au moins un accélérateur est de préférence choisi parmi les acides, les alcools et les dérivés du phénol. Les acides sont notamment des acides carboxyliques, des acides sulfoniques ou des acides inorganiques (notamment l'acide phosphorique). Les acides carboxyliques comprennent en particulier l'acide acétique, l'acide benzoïque, l'acide salicylique, l'acide 2-nitrobenzoïque, l'acide lactique. Les acides sulfoniques comprennent de préférence l'acide méthanesulfonique, l'acide p-toluène sulfonique ou l'acide 4-dodécylbenzene sulfonique. Les alcools sont notamment le méthanol ou des polyols, tels que l'éthylène glycol ou le glycérol. Les dérivés du phénol sont notamment le bisphénol A, le résorcinol ou encore des dérivés halogénés du phénol comme le p-bromophénol, le p-chlorophénol ou encore des nitrophénols comme le 2,4-dinitrophénol.

Lorsqu'il est présent, le diluant réactif est normalement compris uniquement dans le composant A. Les diluants non-réactifs peuvent quant à eux être compris dans le composant A et/ou dans le composant B. Le diluant est utile afin de diminuer la viscosité du mélange et donc de permettre une application aisée du revêtement.

Le diluant réactif comprend de préférence au moins un groupe époxyde. Il est de préférence choisi parmi les éthers (poly)glycidyiques d'alcools aliphatiques, cycloaliphatiques ou aromatiques, notamment parmi le phenyl glycidyl ether, le cresyl glycidyl ether, le benzyl glycidyl ether, le p-n-butyl-phenylglycidyl ether, le p-tert-butyl-phenyl glycidyl ether, le nonyl phenyl glycidyl ether, l'allyl glycidyl ether, le butyl glycidyl ether, l'hexyl glycidyl ether et le 2-ethylhexyl glycidyl ether.

Le composant A comprend, voire consiste essentiellement ou consiste en, au moins une résine époxyde, généralement au moins une charge minérale, et optionnellement au moins un additif (notamment au moins un diluant). Le composant B comprend, voire consiste essentiellement ou consiste en le catalyseur, le durcisseur, et optionnellement au moins une charge minérale et/ou au moins un additif.

Lorsque le kit contient des charges minérales, la proportion massique de charges minérales dans le kit selon l'invention est de préférence comprise dans un domaine allant de 20 à 90%, notamment de 30 à 80%. De préférence, au moins 75%, notamment 90% en poids, voire la totalité, des charges minérales du kit font partie du composant A.

La proportion massique de pigments dans le kit est de préférence comprise dans un domaine allant de 0 à 10%, notamment de 1 à 8%. Le pigment peut être présent dans le composant A et/ou le composant B, de préférence uniquement dans le composant A.

La proportion massique de résine époxyde dans le kit est de préférence comprise dans un domaine allant de 5 à 90%, notamment de 10 à 80%, voire de 20 à 60%. La résine époxyde ne se trouve normalement que dans le composant A.

Le catalyseur et le durcisseur ne se trouvent normalement que dans le composant B, afin d'éviter toute réaction prématurée.

La proportion massique d'autres additifs dans le kit est de préférence comprise dans un domaine allant de 0 à 25%, notamment de 1 à 20%, voire de 2 à 10% ou de encore de 2 à 5%. Les additifs peuvent être distribués entre le composant A et le composant B.

Dans le kit selon l'invention, les proportions massiques respectives du composant A et du composant B (A:B) varient de préférence de 60:40 à 95:5, notamment de 80:20 à 93:7. Le kit selon l'invention est généralement constitué du composant A et du composant B ; il s'agit alors d'un kit bicomposant.

Les deux composants du kit sont généralement séparés physiquement afin d'éviter toute réaction prématurée entre d'une part la résine époxyde et d'autre part le catalyseur et/ou le durcisseur. Le kit peut par exemple comprendre deux récipients distincts contenant chacun un des composants A ou B. Le kit peut également comprendre un récipient comprenant deux compartiments distincts contenant chacun un des composants A ou B. Par exemple, le kit peut être vendu sous la forme d'un seau avec couvercle, dans lequel le composant A est contenu dans le seau et le composant B dans un récipient fixé au seau, par exemple sur la partie inférieure du couvercle.

L'invention a aussi pour objet un revêtement de sol ou revêtement mural obtenu par le mélange du composant A et du composant B du kit selon l'invention et l'application de ce mélange. L'applicateur mélange sur site les deux composants, par exemple manuellement ou au moyen d'un malaxeur afin d'obtenir un mélange qui sera ensuite appliqué sur le support à revêtir.

L'invention a également pour objet un procédé de dépôt d'un revêtement de sol ou d'un revêtement mural tel que décrit précédemment, dans lequel on mélange le composant A et le composant B du kit et l'on applique le mélange sur un sol ou sur un mur. L'application peut être réalisée de manière connue au moyen d'une brosse, d'un rouleau ou d'un pinceau, d'une spatule, d'un platoir flamand, d'une truelle, d'une lisseuse ou encore par pulvérisation.

L'invention a aussi pour objet un sol ou un mur de bâtiment comprenant au moins un revêtement selon l'invention.

L'épaisseur du revêtement est de préférence comprise entre 10 μm et 15 mm, notamment entre 50 μm et 10 mm, voire entre 100 μm et 5 mm ou encore entre 200 μm et 2 mm.

La composition du kit et l'épaisseur du revêtement sont à ajuster en fonction de la fonction remplie par le revêtement.

Le revêtement selon l'invention peut par exemple être une couche d'adhérence, aussi appelée primaire d'adhérence, permettant de combler les pores du support (par exemple une chape) et d'améliorer l'adhésion avec les couches supérieures. L'épaisseur du revêtement est alors de préférence comprise entre 10 et 200 μm. Dans ce cas le kit ne comprend de préférence pas de charge minérale ni de pigments.

Le revêtement selon l'invention peut aussi être une couche de masse. Déposée directement sur la chape ou, préférentiellement, sur une couche d'adhérence, son épaisseur est notamment comprise entre 0,5 et 15 mm. Dans ce cas, le kit comprend de préférence des charges minérales et des pigments.

Le revêtement selon l'invention peut encore être une couche de finition et/ou d'usure, donc la couche la plus externe du sol. Le sol peut en effet comprendre une couche de finition et d'usure au-dessus de la couche de masse lorsque cette dernière ne joue pas ce rôle. Son épaisseur est alors notamment comprise entre 10 et 200 μm.

On peut conférer au revêtement des propriétés antidérapantes, par exemple en ajoutant du sable sur le revêtement avant durcissement.

Le sol peut donc comprendre une couche d'adhérence, une couche de masse et une couche de finition, l'une au moins étant un revêtement de sol selon l'invention.

L'invention est illustrée par les exemples non limitatifs qui suivent.

Différentes formulations de kit ont été testées, qui sont détaillées dans le tableau 1 ci-après.

Plus précisément, le tableau 1 indique pour chaque exemple, les constituants du composant B, ainsi que leurs teneurs pondérales par rapport à la masse du composant B. Le tableau indique également la teneur massique (en g) de composant B pour 100 g de composant A. Par exemple pour l'exemple 1 le kit comprend 9 g de composant B pour 100 g de composant A.

Le composant A est le même pour tous les exemples et comprend (en pourcentages pondéraux) : 35% d'une résine DGEBA diluée dans un diluant réactif (Razeen LR 2254 de la société Jana ayant un EEW de 200g/eq.), 57,35% de sable de silice, 7% de dioxyde de titane, 0,25% de pigment noir, et 0,4% d'additifs (agents démoussants et nivelants).

Le catalyseur employé dans tous les exemples est le produit Jointmine NO-30 de la société Epochemie contenant du 2,4,6-tris(diméthylaminométhyl)phénol, qui comprend trois groupes amine tertiaire. Le durcisseur est un mélange de polyétheramine (Jeffamine D-230, Hunstmann, AHEW = 60g/eq.) et d'une base de Mannich dans un diluant non-réactif (Jointmine 954-2, Epochemie, AHEW = 100g/eq.). L'acide salicylique utilisé dans certains exemples est un accélérateur.

Le tableau indique également les rapports R et T.

[Tableau 1]

|  | 1 | 2 | 3 | 4 | 5 |
|---|---|---|---|---|---|
| Composant B | 9 g | 12 g | 9 g | 13 g | 7,4 g |
| Polyétheramine | 55,6% | 62,6% | 55,6% | 58,9% | 68,1% |
| Base de Mannich et diluant non-réactif | 22,2% | 28,6% | 22,2% | 25,9% | 27,2% |
| Catalyseur | 22,2% | 0 | 0 | 15,2% | 4,7% |
| Acide salicylique | 0 | 8,8% | 22,2% | 0 | 0 |
| R | 1,69 | 1,10 | 1,69 | 1,10 | 1,69 |
| T | 0, 057 | 0 | 0 | 0, 057 | 0,010 |

Les composants A et B ont été mélangés dans les proportions indiquées puis déposés sous forme de revêtement de 3 mm d'épaisseur dans un moule en silicone. Après réticulation à température ambiante (23+/-2°C) pendant 7 jours, différentes propriétés ont été mesurées, qui sont récapitulées dans le tableau 2.

Ce tableau indique plus particulièrement :

- la viscosité initiale du mélange des composants A et B, mesurée par un rhéomètre à 25°C pour un taux de cisaillement de 100 s$^{-1}$, exprimée en Pa.s,
- le temps de gel, mesuré à 25°C à l'aide d'un appareil « Gel Timer » de la société Gelnorm, exprimé en minutes,
- le taux de conversion final des fonctions époxy, exprimé en %,
- le taux de conversion final des fonctions $NH_2$, exprimé en %,

- le taux de conversion final des fonctions NH + NH$_2$, exprimé en %, ces trois taux de conversion étant calculés à partir de spectres dans le domaine du proche infrarouge,
- la dureté (échelle Shore D),
- la perte de masse par abrasion, en mg, après abrasion avec un abrasimètre Taber (1000 cycles, meule abrasive CS-10)
- le module de compression, exprimé en GPa,
- la contrainte limite de compression (avant rupture), exprimée en MPa,
- le module de ténacité, exprimé en MJ.m$^{-3}$,
- la température de transition vitreuse Tg (°C), mesurée par calorimétrie différentielle à balayage (DSC, vitesse de 10°C/min),
- la résistance aux taches (vin rouge, café chaud, ketchup, détergent), exprimée à l'aide d'une note qualitative.

Le module de ténacité correspond à l'aire sous la courbe contrainte/déformation mesurée jusqu'à la rupture.

[Tableau 2]

|  | 1 | 2 | 3 | 4 | 5 |
|---|---|---|---|---|---|
| Viscosité (Pa.s) | 3,8 | 3,5 | 4,0 | 2,6 | 3,0 |
| Temps de gel (min.) | 290 | 220 | 230 | 300 | 660 |
| Conversion époxy (%) | 94 | 95 | 65 | 97 | 80 |
| Conversion NH$_2$ (%) | 100 | 100 | 100 | 99 | 100 |
| Conversion NH+NH$_2$ (%) | 90 | 100 | 100 | 76 | 100 |
| Dureté (Shore D) | 85 | 81 | 23 | 83 | 61 |
| Abrasion (mg) | 32 | 27 | 59 | 26 | 37 |
| Module de compression (GPa) | 1,2 | 1,5 | 0,007 | 0,8 | 0,1 |
| Contrainte limite (MPa) | 114 | 81 | - | 116 | - |
| Module de ténacité (MJ.m$^{-3}$) | 4, 9 | 2,7 | - | 5,9 | - |
| Tg (°C) | 66 | 40 | 9 | 56 | 20 |
| Résistance aux taches | +++ | +++ | +++ | -- | +++ |

La composition de l'exemple 1, selon l'invention, permet d'obtenir un revêtement présentant une bonne résistance mécanique, avec une contrainte à la rupture en compression et un module de ténacité élevés. La résistance aux taches est également importante. On peut noter que malgré le très fort excès en résine époxy, le taux final de conversion des fonctions époxy est de 94%.

L'exemple comparatif 2 ne contient pas de catalyseur et le rapport R n'est que de 1,1, traduisant un léger excès en résine époxy. La résistance aux taches est bonne, mais les propriétés en compression sont nettement moins bonnes que celles de l'exemple 1 : la contrainte à la rupture en compression est significativement diminuée, et le module de ténacité est bien plus faible.

Dans le cas de l'exemple comparatif 3, le rapport R est identique à celui de l'exemple 1 mais le catalyseur est remplacé par un accélérateur (acide salicylique). Il en résulte un faible taux de conversion final des fonctions époxy, et de très mauvaises propriétés mécaniques, que ce soit en termes de dureté ou de résistance à la compression. Le revêtement obtenu est en effet mou et élastique. Le module de compression est très faible, et la contrainte limite ainsi que le module de ténacité ne sont pas mesurables avec un essai de compression puisque l'échantillon est très élastique. C'est également le cas pour l'exemple comparatif 5, pour lequel le rapport R est aussi conforme à l'invention, mais le rapport T est trop faible.

La composition de l'exemple comparatif 4 contient un catalyseur, dans les mêmes teneurs que l'exemple 1, mais le rapport R est de seulement 1,1, donc avec un léger excès d'époxy. On constate que le taux de conversion final des fonctions NH+NH$_2$ est faible, et si le revêtement obtenu présente de bonnes propriétés mécaniques, sa résistance aux taches est en revanche très mauvaise.

L'excès de résine époxy et la présence de catalyseur permettent donc, en synergie, d'obtenir un revêtement présentant une bonne résistance tant d'un point de vue chimique que mécanique.

**Revendications**

1. Kit pour revêtement de sol ou pour revêtement mural comprenant :

   - un composant A comprenant une résine époxyde,
   - un composant B comprenant un durcisseur, qui est un composé comprenant au moins une fonction N-H ou S-H ou un mélange de plusieurs de ces composés, et un catalyseur, qui un composé comprenant au moins un groupe amine tertiaire ou un mélange de plusieurs de ces composés,

   dans lequel le rapport molaire R entre le nombre total de groupes époxydes dans le composant A et le nombre total de fonctions N-H et S-H dans le composant B est d'au moins 1,2 et le rapport T entre la teneur pondérale totale en catalyseur dans le kit et la teneur pondérale totale en résine époxyde dans le kit est compris entre 0,02 et 0,3.

2. Kit selon la revendication précédente, dans lequel le durcisseur comprend un composé comprenant au moins une fonction N-H.

3. Kit selon la revendication précédente, dans lequel le durcisseur est choisi dans le groupe formé par les polyamines aliphatiques, les polyamines cycloaliphatiques, les polyamines arylaliphatiques, les polyamines aromatiques, les polyamines contenant au moins un groupe éther, les polyamidoamines, les phénalkamines, les amines grasses, les adduits de ces polyamines avec des résines époxydes, et les mélanges de deux ou plus de ces polyamines.

4. Kit selon l'une des revendications précédentes, tel que le rapport R est compris entre 1,3 et 8,0, notamment entre 1,4 et 6,0.

5. Kit selon l'une des revendications précédentes, dans lequel le catalyseur est choisi dans le groupe formé par les amines tertiaires ne contenant pas de fonction N-H, les amines et polyamines contenant au moins un groupe amine tertiaire et au moins une fonction N-H, et les mélanges de deux ou plus de ces composés.

6. Kit selon l'une des revendications précédentes, dans lequel le rapport T est compris entre 0,03 et 0,25, notamment entre 0,04 et 0,2.

7. Kit selon l'une des revendications précédentes, dans lequel au moins un parmi ledit composant A et ledit composant B comprend au moins une charge minérale.

8. Kit selon la revendication précédente, dans lequel seul le composant A comprend au moins une charge minérale.

9. Kit selon l'une des revendications 7 ou 8, tel qu'au moins une charge minérale est choisie parmi le carbonate de calcium, le sable, la silice, le quartz, le talc, le sulfate de baryum, le kaolin, les oxydes d'aluminium, les poudres métalliques et le verre expansé.

10. Kit selon l'une des revendications 7 à 9, dans lequel la proportion massique de charges minérales dans le kit est comprise dans un domaine allant de 20 à 90%, notamment de 30 à 80%.

11. Kit selon l'une des revendications précédentes, dans lequel les proportions massiques respectives du composant A et du composant B (A:B) varient de 60:40 à 95:5, notamment de 80:20 à 93:7.

12. Kit selon l'une des revendications précédentes, qui est constitué du composant A et du composant B.

13. Revêtement de sol ou revêtement mural obtenu par le mélange du composant A et du composant B du kit de l'une des revendications précédentes et l'application de ce mélange.

14. Procédé de dépôt d'un revêtement de sol ou d'un revêtement mural selon la revendication précédente, dans lequel on mélange le composant A et le composant B du kit et l'on applique le mélange sur un sol ou sur un mur.

15. Sol comprenant au moins un revêtement de sol selon l'une des revendications 1 à 13, ledit revêtement de sol étant choisi parmi une couche d'adhérence, dont l'épaisseur est comprise entre 10 et 200 $\mu$m, une couche de masse, dont l'épaisseur est comprise entre 0,5 et 15 mm et une couche de finition et/ou d'usure, dont l'épaisseur est comprise entre 10 et 200 $\mu$m.

**Patentansprüche**

1.  Kit für Bodenbeläge oder für Wandverkleidungen, umfassend:

    - eine Komponente A, umfassend ein Epoxidharz,
    - eine Komponente B, umfassend einen Härter, der eine Verbindung, umfassend mindestens eine N-H- oder S-H-Funktion, oder ein Gemisch aus mehreren dieser Verbindungen ist, und einen Katalysator, der eine Verbindung, umfassend mindestens eine tertiäre Amingruppe, oder ein Gemisch aus mehreren dieser Verbindungen ist,
    wobei das Molverhältnis R zwischen der Gesamtzahl der Epoxidgruppen in der Komponente A und der Gesamtzahl der N-H- und der S-H-Funktionen in der Komponente B mindestens 1,2 beträgt und das Verhältnis T zwischen dem Gesamtgewichtsgehalt an Katalysator in dem Kit und dem Gesamtgewichtsgehalt an Epoxidharz in dem Kit zwischen 0,02 und 0,3 liegt.

2.  Kit nach dem vorstehenden Anspruch, wobei der Härter eine Verbindung, umfassend mindestens eine N-H-Funktion, umfasst.

3.  Kit nach dem vorstehenden Anspruch, wobei der Härter ausgewählt ist aus der Gruppe bestehend aus aliphatischen Polyaminen, cycloaliphatischen Polyaminen, arylaliphatischen Polyaminen, aromatischen Polyaminen, Polyaminen, die mindestens eine Ethergruppe enthalten, Polyamidoaminen, Phenalkaminen, Fettaminen, Addukten dieser Polyamine mit Epoxidharzen und Mischungen aus zwei oder mehr dieser Polyamine.

4.  Kit nach einem der vorstehenden Ansprüche, wobei das Verhältnis R zwischen 1,3 und 8,0, insbesondere zwischen 1,4 und 6,0, liegt.

5.  Kit nach einem der vorstehenden Ansprüche, wobei der Katalysator ausgewählt ist aus der Gruppe bestehend aus tertiären Aminen, die keine N-H-Funktion enthalten, Aminen und Polyaminen, die mindestens eine tertiäre Amingruppe und mindestens eine N-H-Funktion enthalten, und Mischungen aus zwei oder mehr dieser Verbindungen.

6.  Kit nach einem der vorstehenden Ansprüche, wobei das Verhältnis T zwischen 0,03 und 0,25, insbesondere zwischen 0,04 und 0,2, liegt.

7.  Kit nach einem der vorstehenden Ansprüche, wobei mindestens eine aus der Komponente A und der Komponente B mindestens einen mineralischen Füllstoff umfasst.

8.  Kit nach dem vorstehenden Anspruch, wobei nur die Komponente A mindestens einen mineralischen Füllstoff umfasst.

9.  Kit nach einem der Ansprüche 7 oder 8, wobei mindestens ein mineralischer Füllstoff ausgewählt ist aus Calciumcarbonat, Sand, Siliciumdioxid, Quarz, Talcum, Bariumsulfat, Kaolin, Aluminiumoxiden, Metallpulvern und Blähglas.

10. Kit nach einem der Ansprüche 7 bis 9, wobei der Massenanteil an mineralischen Füllstoffen in dem Kit in einem Bereich von 20 bis 90 %, insbesondere von 30 bis 80 %, liegt.

11. Kit nach einem der vorstehenden Ansprüche, wobei die jeweiligen Massenanteile der Komponente A und der Komponente B (A : B) von 60 : 40 bis 95 : 5, insbesondere von 80 : 20 bis 93 : 7, variieren.

12. Kit nach einem der vorstehenden Ansprüche, das aus der Komponente A und der Komponente B besteht.

13. Bodenbelag oder Wandverkleidung, der/die durch Mischen der Komponente A und der Komponente B des Kits nach einem der vorstehenden Ansprüche und Auftragen dieser Mischung erhalten wird.

14. Verfahren zum Aufbringen eines Bodenbelags oder einer Wandverkleidung nach dem vorstehenden Anspruch, wobei die Komponente A und die Komponente B des Kits gemischt werden und die Mischung auf einen Boden oder auf eine Wand aufgetragen wird.

15. Boden, umfassend mindestens einen Bodenbelag nach einem der Ansprüche 1 bis 13, wobei der Bodenbelag ausgewählt ist aus einer Haftschicht, deren Dicke zwischen 10 und 200 µm liegt, einer Masseschicht, deren Dicke zwischen 0,5 und 15 mm liegt, und einer Deck- und/oder Nutzschicht, deren Dicke zwischen 10 und 200 $\mu$m liegt.

**Claims**

1. Kit for a floor covering or for a wall covering, comprising:

   - a component A comprising an epoxy resin,
   - a component B comprising a hardener, which is a compound comprising at least one N-H or S-H function or a mixture of several of these compounds, and a catalyst, which is a compound comprising at least one tertiary amine group or a mixture of several of these compounds,

   in which the mole ratio R between the total number of epoxide groups in the component A and the total number of N-H and S-H functions in the component B is at least 1.2 and the ratio T between the total weight content of catalyst in the kit and the total weight content of epoxy resin in the kit is comprised between 0.02 and 0.3.

2. Kit according to the preceding claim, in which the hardener comprises a compound comprising at least one N-H function.

3. Kit according to the preceding claim, in which the hardener is chosen from the group formed by aliphatic polyamines, cycloaliphatic polyamines, arylaliphatic polyamines, aromatic polyamines, polyamines containing at least one ether group, polyamidoamines, phenalkamines, fatty amines, the adducts of these polyamines with epoxy resins, and mixtures of two or more of these polyamines.

4. Kit according to one of the preceding claims, such that the ratio R is comprised between 1.3 and 8.0, in particular between 1.4 and 6.0.

5. Kit according to one of the preceding claims, in which the catalyst is chosen from the group formed by tertiary amines not containing any N-H function, amines and polyamines containing at least one tertiary amine group and at least one N-H function, and mixtures of two or more of these compounds.

6. Kit according to one of the preceding claims, in which the ratio T is comprised between 0.03 and 0.25, in particular between 0.04 and 0.2.

7. Kit according to one of the preceding claims, in which at least one among said component A and said component B comprises at least one mineral filler.

8. Kit according to the preceding claim, in which only the component A comprises at least one mineral filler.

9. Kit according to one of claim 7 or 8, such that at least one mineral filler is chosen from calcium carbonate, sand, silica, quartz, talc, barium sulfate, kaolin, aluminium oxides, metal powders and expanded glass.

10. Kit according to one of Claims 7 to 9, in which the weight proportion of mineral fillers in the kit is within a range extending from 20 to 90%, in particular from 30 to 80%.

11. Kit according to one of the preceding claims, in which the respective weight proportions of the component A and of the component B (A:B) range from 60:40 to 95:5, in particular from 80:20 to 93:7.

12. Kit according to one of the preceding claims, which consists of the component A and of the component B.

13. Floor covering or wall covering obtained by mixing the component A and the component B of the kit of one of the preceding claims and applying this mixture.

14. Method for depositing a floor covering or a wall covering according to the preceding claim, in which the component A and the component B of the kit are mixed and the mixture is applied to a floor or to a wall.

15. Floor comprising at least one floor covering according to one of claims 1 to 13, said floor covering being chosen from an adhesion layer having a thickness comprised between 10 and 200 $\mu$m, a mass layer having a thickness comprised between 0.5 and 15 mm, and a finishing and/or wear layer having a thickness comprised between 10 and 200 µm.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2931832
- WO 8501951 A
- US 2013005853 A
- KR 1071755432
- EP 1921100 A
- GB 883521 A